(19) Europäisches Patentamt
European Patent Office
Office européen des brevets

(11) **EP 4 648 009 A1**

(12) **EUROPEAN PATENT APPLICATION**
published in accordance with Art. 153(4) EPC

(43) Date of publication:
**12.11.2025 Bulletin 2025/46**

(21) Application number: **23914712.7**

(22) Date of filing: **26.10.2023**

(51) International Patent Classification (IPC):
***G06T 7/593*** (2017.01)  ***G06T 7/00*** (2017.01)
***G08G 1/16*** (2006.01)

(52) Cooperative Patent Classification (CPC):
**G06T 7/00; G06T 7/593; G08G 1/16**

(86) International application number:
**PCT/JP2023/038652**

(87) International publication number:
**WO 2024/147223 (11.07.2024 Gazette 2024/28)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **06.01.2023 JP 2023001110**

(71) Applicant: **Hitachi, Ltd.
Tokyo 100-8280 (JP)**

(72) Inventors:
• **ENDO Takeshi
Tokyo 100-8280 (JP)**
• **MATONO Haruki
Tokyo 100-8280 (JP)**
• **KIDO Hideaki
Tokyo 100-8280 (JP)**

(74) Representative: **MERH-IP Matias Erny Reichl
Hoffmann
Patentanwälte PartG mbB
Paul-Heyse-Straße 29
80336 München (DE)**

(54) **ENVIRONMENT RECOGNITION DEVICE AND ENVIRONMENT RECOGNITION METHOD**

(57)    Provided are an environment recognition device and an environment recognition method which are capable of achieving a highly accurate depth estimation in a field of view non-overlap region. This environment recognition device is characterized by comprising: an image acquisition unit for acquiring an image captured by a camera; a first depth calculation unit which calculates a first depth in a first region which partially overlaps or is adjacent to the field of view of the camera; and a second depth calculation unit which uses the first depth in the first region and the image captured by the camera and calculates a second depth in a second region which is not included in the first region in the field of view of the camera.

FIG. 1

## Description

Technical Field

The present invention relates to an environment recognition apparatus and an environment recognition method in which an environment is recognized using information from a camera.

Background Art

To implement a preventive safety function and autonomous driving, three-dimensional sensing is important and utilization of LiDAR and a stereo camera enable three-dimensional highly-accurate measurement. However, in case of stereo cameras, a region where fields of view overlap and a (monocular visional) region where fields of view do not overlap are present; in general, a problem that the depth accuracy is lower in a field of view non-overlapped region (monocular vision) region as compared with the depth accuracy of a field of view overlapped region arises.

With respect to the foregoing, Patent Literature 1 discloses a depth estimation technique utilizing a stereo camera; in the literature, it is proposed that when an image of an object is picked up astride a region where fields of view overlap and a (monocular visional) region where fields of view do not overlap, a depth measured in the field of view overlapped region is taken as a distance of the object.

Citation List

Patent Literature

Patent Literature 1: Japanese Unexamined Patent Application Publication No. 2022-064388

Summary of Invention

Technical Problem

In the case of Patent Literature 1, the distance accuracy of an object whose image was picked up astride two regions can be enhanced. Meanwhile, the technique cannot be applied to an object whose image is picked up only in a field of view non-overlapped region (that is, an object whose image is not picked up astride regions). A distance in a field of view overlapped region is directly taken as a distance to an object; and this poses a problem that when a distance in a field of view overlapped region is wrong, estimation accuracy is degraded.

Because of the foregoing, it is an object of the present invention to provide an environment recognition apparatus and an environment recognition method in which depth estimation of a field of view non-overlapped region can be performed with accuracy.

Solution to Problem

Based on the foregoing, the present invention is an "environment recognition apparatus including: an image acquisition unit that acquires an image picked up by a camera; a first depth computation unit that computes a first depth in a first region which is a region partially overlapping with or adjoining to a field of view of a camera; and a second depth computation unit that, using the first depth in the first region and an image picked up by the camera, computes a second depth in a second region which is a region not embraced in the first region of the field of view of the camera."

The present invention is an "environment recognition method including: acquiring two-dimensional information and three-dimensional information about an environment; obtaining a first depth of a first region in the environment and a feature of the first depth from the three-dimensional information; obtaining a feature of the two-dimensional information about a second region other than the first region in the environment; obtaining a relevance ratio between the feature of the two-dimensional information and a feature of the first depth; and using a feature of the two-dimensional information corrected according to the relevance ratio to compute a second depth in the second region."

The present invention is an "environment recognition apparatus including: an input unit that acquires two-dimensional information and three-dimensional information about an environment; a first depth computation unit that obtains a first depth of a first region in the environment from the three-dimensional information; and a second depth computation unit that obtains a feature of the first depth, obtains a feature of the two-dimensional information about a second region other than the first region in the environment; obtains a relevance ratio between the feature of the two-dimensional information and the feature of the first depth, and, using a feature of the two-dimensional information corrected according to the relevance ratio, computes a second depth in the second region."

Advantageous Effects of Invention

According to the present invention, an environment recognition apparatus that enables depth estimation of a field of view non-overlapped region to be performed with accuracy can be provided.

Brief Description of Drawings

FIG. 1 is a drawing illustrating an example of a general configuration of an environment recognition apparatus according to an embodiment of the present invention.
FIG. 2 is a drawing illustrating an example of a camera and an overlapped image.

FIG. 3 is a drawing showing an example of a processing flow of an environment recognition apparatus according to an embodiment of the present invention.

FIG. 4 is a drawing explaining a concept of depth feature extraction processing at a first feature computation unit.

FIG. 5 is a drawing explaining a concept of image feature extraction processing at a second feature computation unit.

FIG. 6 is a drawing showing a concrete example of relevance ratio computation processing and feature integration processing according to a first embodiment.

FIG. 7 is a drawing explaining a concept of field of view non-overlapped region depth computation processing.

FIG. 8 is a drawing showing an example of relevance ratio computation processing and feature integration processing according to a second embodiment of the present invention.

FIG. 9 is a drawing showing an example of relevance ratio computation processing and feature integration processing according to a third embodiment of the present invention.

FIG. 10 is a drawing illustrating an example of a general configuration of an environment recognition apparatus according to a fourth embodiment of the present invention.

FIG. 11 is a drawing illustrating an example of a camera and an overlapped image according to the fourth embodiment of the present invention.

Description of Embodiments

Hereafter, a description will be given to embodiments of the present invention with reference to the drawings. With respect to the present invention, an overlapped region from which three-dimensional information can be obtained and a non-overlapped region of two-dimensional information will be handled; as a means for obtaining three-dimensional information, there are cases where a plurality of monocular cameras or a stereo camera (comprised of a plurality of monocular cameras) is used and cases where a combination of LiDAR and a monocular camera is used; therefore, in relation to the first, second, and third embodiments, an example of the former will be described and in relation to the subsequent fourth embodiment, a combination of LiDAR and a monocular camera will be described.

First Embodiment

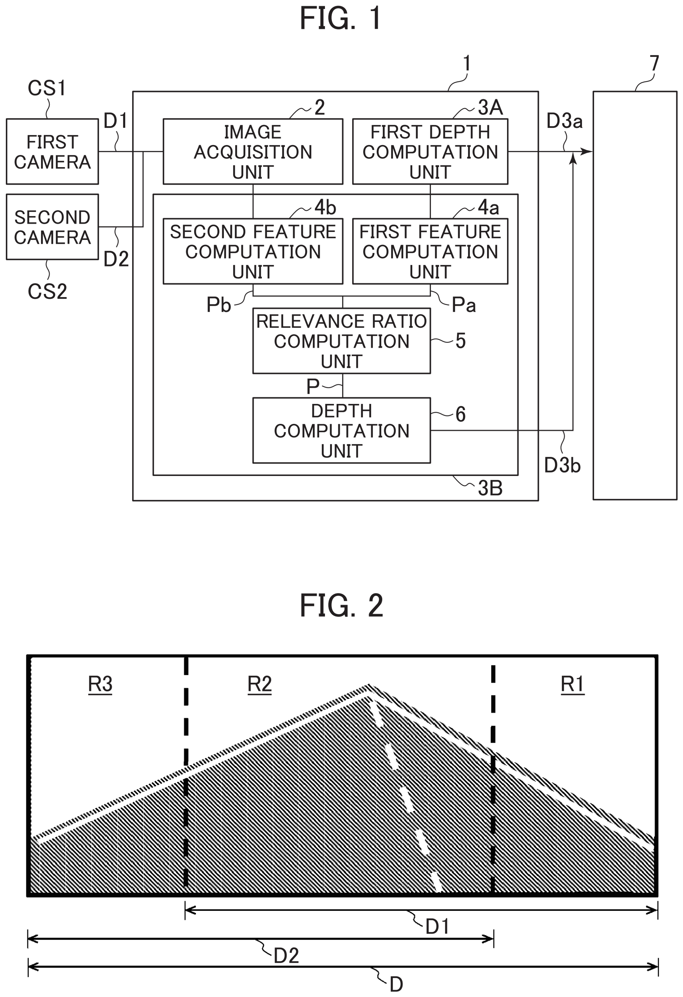

FIG. 1 is a drawing illustrating an example of a general configuration of an environment recognition apparatus according to an embodiment of the present invention. The environment recognition apparatus 1 is mounted in, for example, a vehicle and acquires image information D1, D2 from a camera CS (CS1, CS2) on the vehicle and finally measures a depth D3 (D3a, D3b) from the images. The measured depth D3 (D3a, D3b) is given to a vehicle control apparatus 7 and is utilized to control the vehicle by determining a distance from the vehicle to a target object.

In this case, the camera CS for acquiring image information is a plurality of monocular cameras or a stereo camera (comprised of a plurality of monocular cameras) and an overlapped image D of the image information D1, D2 obtained from the camera CS is as shown in FIG. 2 as an example.

FIG. 2 is a drawing showing an example of a camera and an overlapped image. In the overlapped image D in FIG. 2, the image regions R1 and R2 are regions in the image D1 captured by a right front camera CS1 mounted in the vehicle and the image regions R2 and R3 are regions in the image D2 captured by a left front camera CS2 mounted in the vehicle.

This overlapped image D is based on a combination of the monocular images D1, D2 grasped by the monocular left and right cameras C1, C2; the left and right image regions R1, R3 are non-overlapped regions of two images and the center image region R2 is an overlapped region of two images. As a result, the center overlapped region R2 is a stereo region and three-dimensional information can be obtained from there; therefore, accurate depth measurement can be made as is well known. Meanwhile, since the left and right non-overlapped regions R1, R3 are two-dimensional information, it is difficult to make an accurate depth measurement.

To eliminate the non-overlapped regions R1, R3, some methods, including use of a wide angle camera and disposition of a large number of cameras around a vehicle, are possible. However, these techniques are inevitably expensive; therefore, in the present invention shown in FIG. 1, depth measurement is enabled by image information processing with the left and right non-overlapped regions R1, R3 in FIG. 2.

In the environment recognition apparatus 1 in FIG. 1, first, at an image acquisition unit 2, image information D1, D2 is acquired from a camera CS (CS1, CS2) in the vehicle. The image information D1, D2 is provided to a first depth computation unit 3A and a second depth computation unit 3B. The first depth computation unit 3A computes a depth D3a in the overlapped region R2 in FIG. 2 and the second depth computation unit 3B computes a depth D3b in the non-overlapped regions R1, R3 in FIG. 2.

In the processing of the first depth computation unit 3A, with respect to a stereo region R2, a depth D3a is obtained by three-dimensional information processing. In the processing here, a depth D3a can be obtained by performing well known processing; a depth D3a can be computed by utilizing, for example, publicly known stereo matching (a left image is searched for relative to left and right camera right images and a most similar position is determined). Alternatively, a publicly known deep learning model can be utilized to compute a depth D3a from left and right two images.

In the processing of the second depth computation unit 3B, with respect to the left and right non-overlapped regions R1, R3 in FIG. 2, a depth D3b is obtained as described below: In this processing, first, at a first feature computation unit 4a, a feature Pa of the depth D3a of the overlapped region R2 obtained at the first depth computation unit 3A is obtained; and at a second feature computation unit 4b, a feature Pb of images of the non-overlapped regions R1, R3.

Specifically, for example, the first feature computation unit 4a performs convolution processing with respect to the depth image of the non-overlapped region R2 computed by the first depth computation unit 3A and thereby computes a first feature Pa. A value of a kernel utilized for convolution in this processing is determined by learning, described later. Any kernel size for convolution, nonlinear function, and the like can be utilized. This is also the case with the following convolution.

The second feature computation unit 4b performs convolution processing with respect to the images of the non-overlapped regions R1, R3 and thereby computes a second feature Pb. A value of a kernel utilized for convolution is determined by learning, described later.

At a relevance ratio computation unit 5, first, a relevance ratio Q between the first feature Pa and the second feature Pb is computed. A relevance ratio Q is computed by an inner product of the first feature Pa and the second feature Pb. At the relevance ratio computation unit 5, subsequently, based on the computed relevance ratio Q, the first feature Pa is weighted and added to the second feature Pb to obtain a feature P. A relevance ratio Q may be obtained by directly utilizing the first feature Pa and the second feature Pb or may be calculated using a feature P computed by respectively convoluting the first feature Pa and the second feature Pb. A value of a kernel utilized for convolution is determined by learning, described later.

A depth computation unit 6 uses a feature P updated by the relevance ratio computation unit 5 as an input and further performs convolution computation to estimate a final depth D3b of the non-overlapped regions R1, R3. A value of a kernel utilized for convolution is determined by learning, described later.

With respect to learning, A kernel utilized for convolution is determined by learning. For learning, correct depth data collected by LiDAR in advance is utilized. So as to minimize a difference value of a depth computed by the depth computation unit 6 and a correct depth collected by LiDAR, a value of a kernel utilized at the first feature computation unit 4a, the second feature computation unit 4b, the relevance ratio computation unit 5, and the depth computation unit 6 is updated.

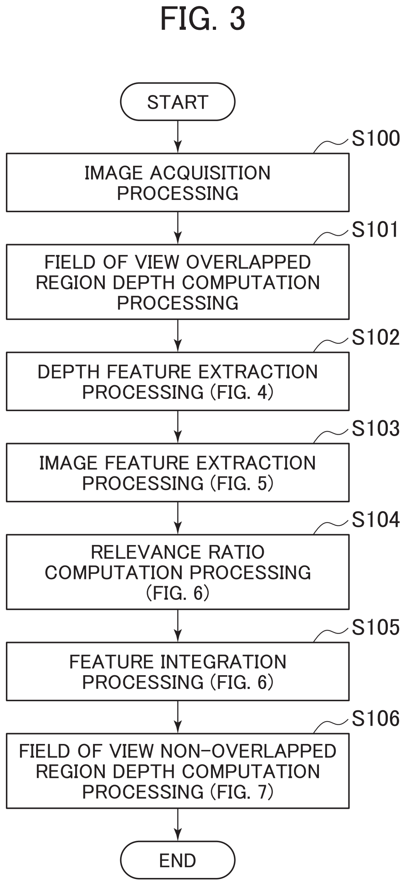

FIG. 3 is a drawing illustrating an example of a processing flow of an environment recognition apparatus according to an embodiment of the present invention.

However, this processing is based on the assumption that a kernel utilized for convolution utilized in the subsequent processing has been subjected to previous learning and so determined that a difference between an estimation result and a correct depth is minimized.

In this processing, first, at processing Step S100, the image acquisition unit 2 acquires two pieces of image information D1, D2. At processing Step S101, subsequently, as depth computation processing for the field of view overlapped region R2, the first depth computation unit 3A utilizes, for example, two images to perform stereo matching. A depth D3a in the field of view overlapped region R2 is thereby estimated.

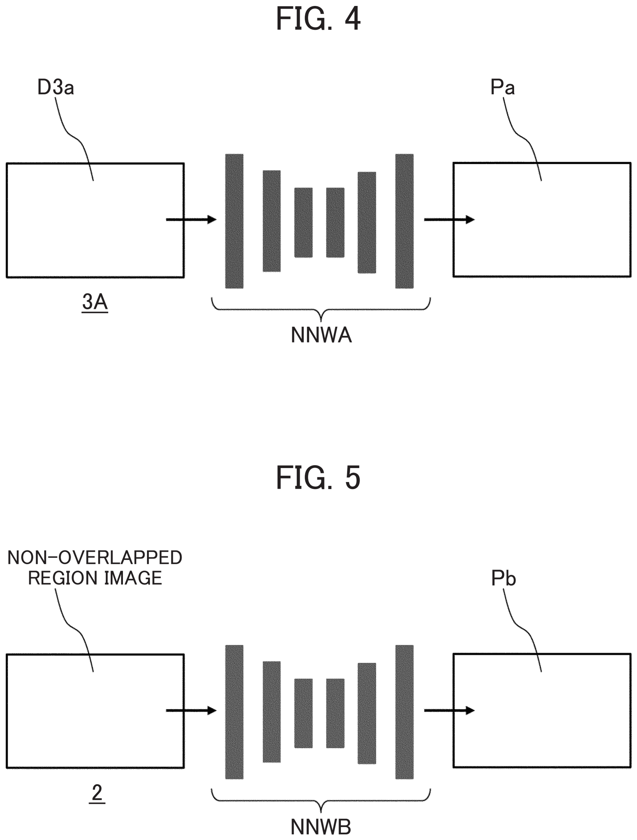

At processing Step S102, the first feature computation unit 4a performs depth feature extraction processing with respect to the field of view overlapped region R2. FIG. 4 is a drawing explaining a concept of depth feature extraction processing and an image of a depth (first depth image) in the field of view overlapped region R2 is used as an input and a convolution neural network NNWA is applied to calculate a first feature Pa.

At processing Step S103, the second feature computation unit 4b performs feature extraction processing with respect to the non-overlapped regions R1, R3. FIG. 5 is a drawing explaining a concept of image feature extraction processing and images (non-overlapped region images) in the non-overlapped regions R1, R3 are used as an input and a convolution neural network NNWB is applied to calculate a second feature Pb.

A second feature Pb is respectively obtained with respect to the non-overlapped regions R1 and R3. The convolution neural network NNWA utilized in depth feature extraction processing and the convolution neural network NNWB utilized in image feature extraction processing are differently configured.

At processing Step S104, at the relevance ratio computation unit 5, a relevance ratio Q between the first feature Pa and the second feature Pb is computed. A relevance ratio Q is computed by an inner product of the first feature Pa and the second feature Pb.

At processing Step S105, at the relevance ratio computation unit 5, the first feature Pa is weighted based on the computed relevance ratio Q and is added to the second feature Pb to obtain a feature P. A relevance ratio Q may be obtained by directly utilizing the first feature Pa and the second feature Pb or may be calculated using a feature computed by respectively convoluting the first feature Pa and the second feature Pb.

At processing Step S106, at the depth computation unit 6, depth computation processing is performed with respect to the field of view non-overlapped regions R1, R3. Here, for example, a feature P updated at the relevance ratio computation unit 5 is used as an input and convolution computation is further performed to estimate a final depth D3b of the field of view non-overlapped regions R1, R3.

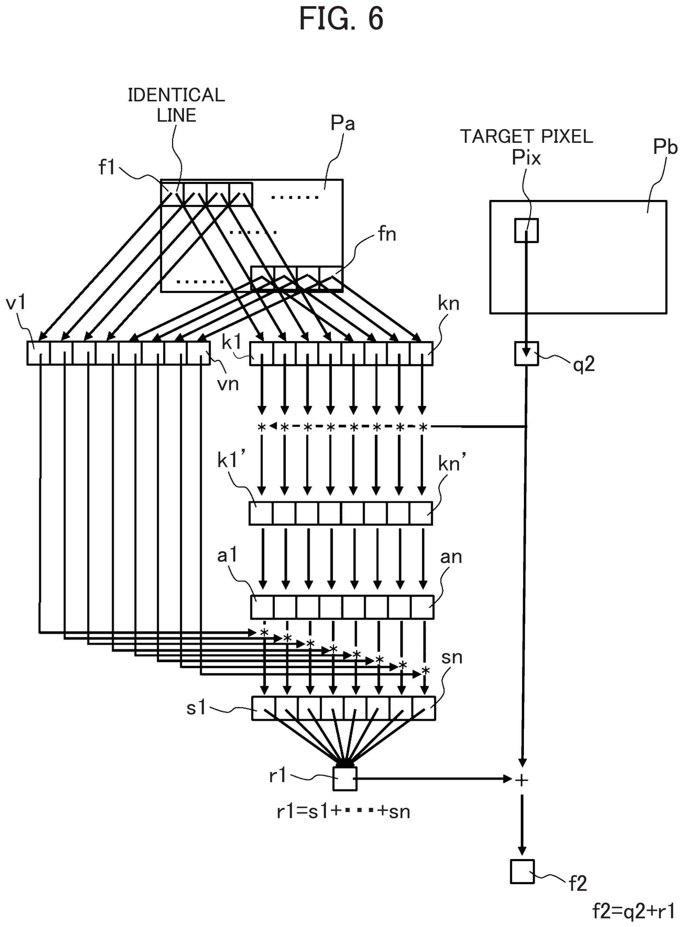

FIG. 6 is a drawing showing a concrete example of the relevance ratio computation processing (processing Step S104) and feature integration processing (processing Step S105) in the flow in FIG. 3. In FIG. 6, at the right upper part, the second feature Pb obtained from an image of R1 of the non-overlapped regions is described and at the left upper part, the first feature Pa obtained from a depth of the overlapped region R2 is described. In the following description, processing with R1 targeted will be explained but the same processing can also be performed with respect to R3.

In FIG. 6, with respect to a series of elements (f1...fn) extended from upper left to lower right of information of the first feature Pa obtained from a depth of the overlapped region R2, information obtained by convoluting the elements respectively utilizing different kernels is value (v1...vn) and key (k1...kn).

In relation to FIG. 6, a description will be given to a method for updating a feature with respect to a target pixel Pix in an image of a non-overlapped region R1. What is obtained by performing convolution computation once with respect to a feature Pb of the target pixel Pix is query q2 and using a relation between query q2 and key (k1...kn), a relevance ratio between query q2 and the first feature Pa is finally obtained as f2. The similar processing is repeatedly performed with the target pixel Pix changed and finally, a respective feature is updated for the entire second feature Pb and a feature P is thereby obtained.

Hereafter, a description will be given to concrete processing using a mathematical formula. A pattern indicated by the first feature Pa contains information of depth; therefore, the following procedure is shown here: a relevance ratio of the first feature Pa is computed to a target pixel Pix of the second feature Pb and the feature of the target pixel is updated.

For this purpose, first, convolution of size of 1x1 is performed with respect to the second feature Pb to compute query q2. Meanwhile, also with respect to the first feature Pa, convolution of 1x1 is performed for all the features (f1...fn; n is a total number) thereof to calculate value v1 and key k1. Kernels of convolution utilized for v1 and k1 are different from each other. This processing is performed to compute v1...vn and k1...kn. Subsequently, with respect to each ki (i=1...n), an inner product with q2 is calculated. At this time, by utilizing a predetermined constant C, ki' (i=1...n) is calculated in accordance with Formula (1). However, *operator is an inner product. This ki' indicates a relevance ratio Q between the first feature Pa and the second feature Pb.
[Formula 1]

$$ki'=ki*q2/C \qquad (1)$$

Subsequently, by computing ai (i=1...n) in accordance with Formula (2), normalization is performed so that the sum total of relevance ratio Q is 1. Here, exp is exponential.
[Formula 2]

$$ai=exp(ki')/\Sigma_j exp(kj') \qquad (2)$$

Subsequently, each ai and vi are utilized to calculate si as by Formula (3) below. Since ai is a scalar and vi is a vector, si is also a vector.
[Formula 3]

$$si=ai*vi \qquad (3)$$

Then, r1 is calculated in accordance with Formula (4).
[Formula 4]

$$r1=\Sigma_i si \qquad (4)$$

Finally, q2 is updated in accordance with Formula (5).
[Formula 5]

$$f2=q2+r1 \qquad (5)$$

That is, the above-mentioned processing indicates that: with respect to a target pixel Pix of the second feature Pb, a relevance ratio (normalized a1...an) with the first feature Pa is computed; and based on the relevance ratio, the first feature (v1...vn) is weighted and added to the second feature q2. The above-mentioned calculation is only for some target pixel Pix; In relevance ratio computation processing and feature integration processing, the same calculation is performed for all the pixels of the second feature. At this time, v1...vn or k1...kn calculated from the first feature (f1...fn) is not altered. That is, when the above-mentioned calculation is performed for different second features, a value of q2 is altered but an identical value is used for vi and ki.

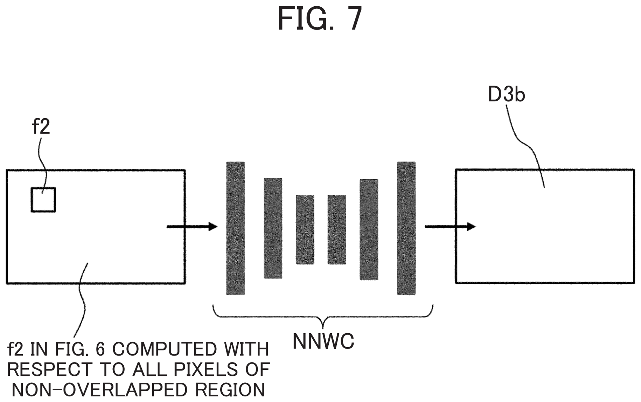

A description will be given to the field of view non-overlapped region depth computation processing (processing Step S106) in FIG. 3 with reference to FIG. 7. Here, features updated by relevance ratio computation processing and feature integration processing are used as an input and a convolution neural network NNWC is performed to compute a depth D3b in the field of view non-overlapped regions R1, R3.

In the above-mentioned present invention, depth information of three-dimensional information can be reflected in two-dimensional information of the field of view non-overlapped regions R1, R3. As a concrete explanation of this, for example, it will be assumed that environment information obtained by image pick-up is a cloud in the sky, a tree, and the ground. In this case, pieces of information of the cloud in the sky, the tree, and the ground are reflected in the first feature Pa and the second feature Pb as vectors respectively having specific directions and different in magnitude and direction from each other.

In this case, images from the cameras C1, C2 embrace the cloud in the sky, the tree, and the ground and key (k1...kn) of the first feature Pa aggregated to depth are also an information column containing depths in the cloud in the sky, the tree, and the ground. Meanwhile, it will be assumed that a target pixel Pix of the second feature Pb as two-dimensional image information is a region of a cloud in the sky.

Thus, when serial information and a target pixel Pix of interest are both a portion of a cloud in the sky, the directions of respective vector information indicate an identical direction. Conversely, when serial information is a tree and the ground, the directions of respective vector information indicate different directions. By inner product processing of vectors, a value of the former is largely evaluated and a value of the latter is small evaluated. As a result, this target pixel Pix is grasped as a relevance ratio in which a depth of information of the sky is deeply reflected, thus, a final feature.

In the present embodiment, depth information D3a of the field of view overlapped region R2 is inputted to estimate a depth D3b of the field of view non-overlapped regions R1, R3. By utilizing not only an image of the field of view overlapped region R2 but also depth information D3a of the field of view overlapped region R2, a depth can be estimated with accuracy. A depth D3a of the field of view overlapped region R2 is not directly used as a depth D3b of the field of view non-overlapped regions R1, R3 but is utilized to update a feature of the field of view overlapped region R2. As a result, even when an error has occurred in depth information D3a of the field of view overlapped region R2, the degree of influence thereof can be reduced.

In the present embodiment, a relevance ratio is computed and integration of features is performed. When a depth of a road surface in the field of view non-overlapped regions R1, R3 is estimated, information of a depth of the sky in the field of view overlapped region is not useful. By computing a relevance ratio as in the present invention and integrating features based on the relevance ratio, utilization of an unnecessary feature can be reduced and accuracy can be further enhanced.

In the present operation example, inner product calculation is utilized to compute a relevance ratio. Since inner product calculation can be implemented by sum of products operation of vectors, high-speed processing can be implemented. As a result, a relevance ratio can be computed with less operation.

Second Embodiment

In the relevance ratio computation processing and feature integration processing in the first embodiment, a relevance ratio Q is computed with respect to all the regions of the first feature Pa. In the second embodiment, meanwhile, a relevance ratio is computed with respect to the first feature Pa present on the identical line with a target pixel Pix of the second feature Pb.

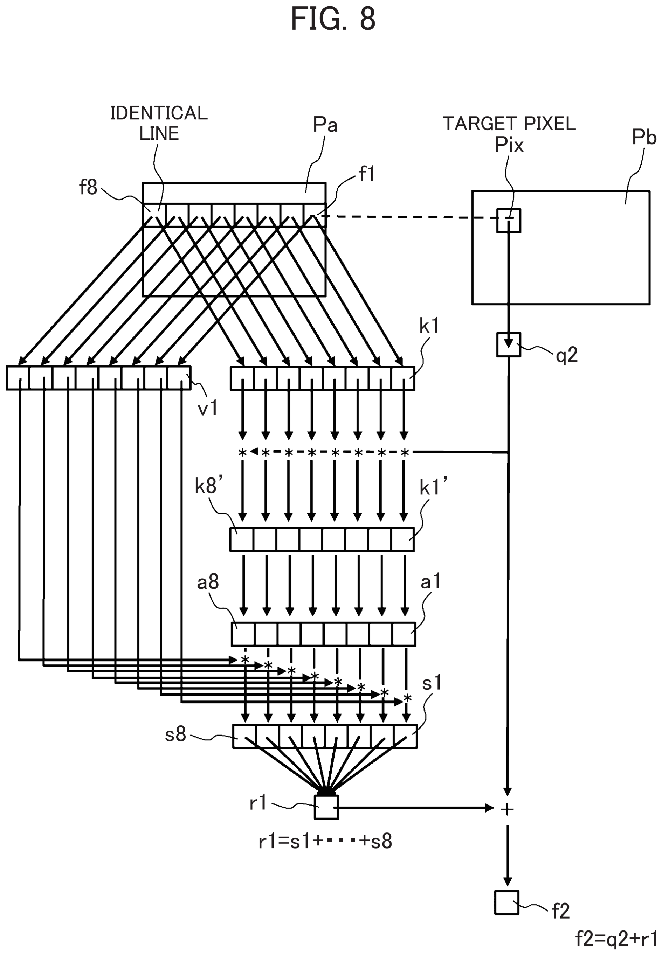

FIG. 8 is a drawing showing an example of relevance ratio computation processing and feature integration processing according to the second embodiment. Here, with respect to the second feature Pb and the first feature Pa, for example, when a target pixel Pix of interest on the second feature Pb is present on a first line, element information of the first feature Pa compared therewith is compared only with an element information column on the identical first line. The drawing shows a case where eight pieces of element information are present on an identical line.

By limiting a number of targets of relevance ratio computation as in the second embodiment, computation can be reduced. As a result, a relevance ratio can be computed with less computation.

Third Embodiment

In the first and second embodiments, a relevance ratio is computed with respect to images at identical time and features are integrated. Meanwhile, as a depth computed in the field of view overlapped region, information acquired in the past can also be utilized.

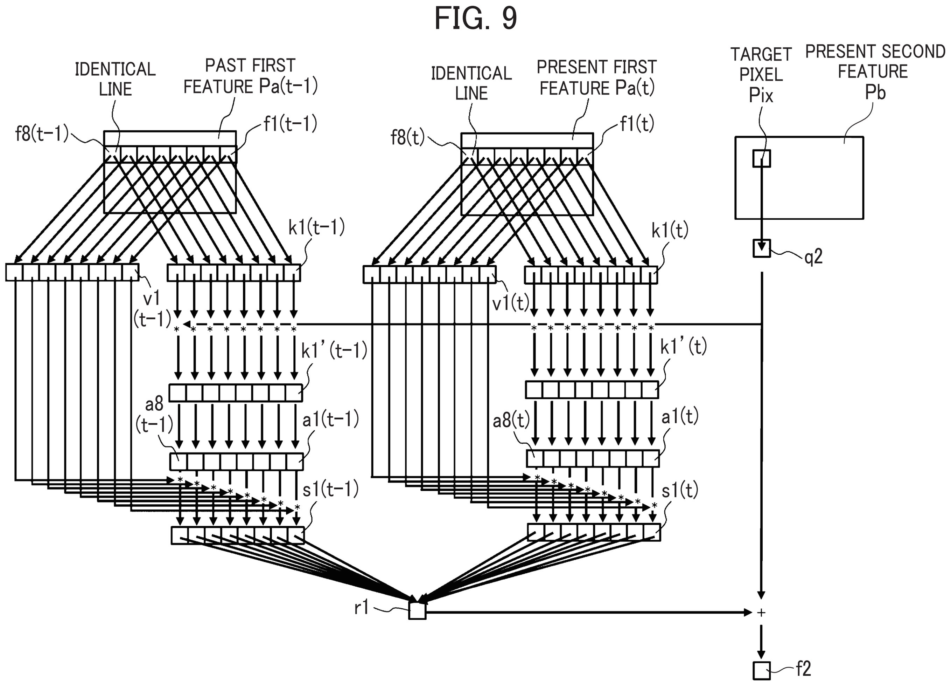

FIG. 9 shows a method for computing a relevance ratio utilizing depth information of a field of view overlapped region acquired in the past and integrating features. The drawing shows a case where the present time is t and depth information at t-1 one frame before is utilized. The present second feature, the present first feature, and the past first feature are indicated from right to left. The past first feature is obtained by utilizing a vehicle speed and yaw rate of the subject vehicle and past depth information to align the past depth information with the present time and thereafter performing computation by the depth feature extraction processing shown in FIG. 4. A major difference from the first embodiment and the second embodiment is that: with respect to q2 of the present second feature, a relevance ratio is computed with respect not only to the present first feature but also to the past first feature. When a relevance ratio is normalized in accordance with Formula (2), normalization processing is performed so that a sum total of the relevance ratios related to the present and the past is 1.

By utilizing past depth information as in the third embodiment, depth information within a wider range can be utilized and a depth can be estimated with accuracy.

Fourth Embodiment

The first, second, and third embodiments are based on the assumption that a camera CS for acquiring image information is a plurality of monocular cameras or a stereo camera (comprised of a plurality of monocular cameras).

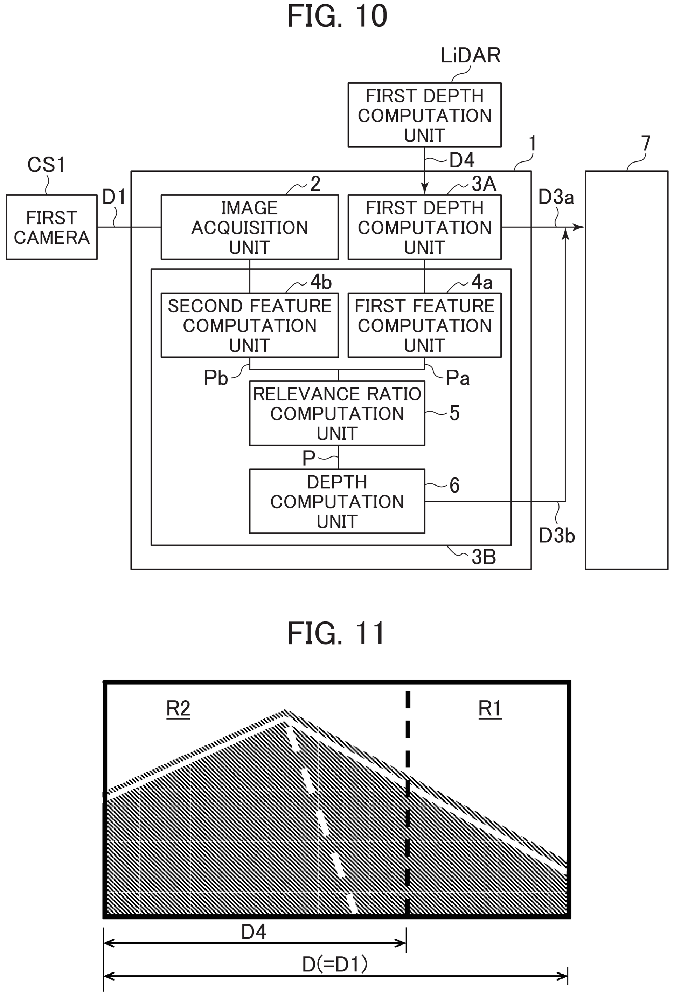

Alternatively, a combination of LiDAR and a monocular camera is also acceptable. For example, the camera is changed to a monocular camera C1 and LiDAR as shown in FIG. 10; a depth D3a is obtained from point cloud information D4 of LiDAR by processing of the first depth computation unit 3A; and using this, at the first feature computation unit 4a, a feature Pa of a depth D3a of an overlapped region R2 obtained at the first depth computation unit 3A is obtained.

In this case, relation between point cloud information of LiDAR and an image pick-up region of the monocular camera C1 is as shown in FIG. 11. A part D4 of the image pick-up region D of the monocular camera C1 is covered by the point cloud information of LiDAR.

Up to this point, in relation to embodiments of the present invention, a description has been given to a case where relevance ratio computation and integration processing of the feature of a field of view overlapped region and non-overlapped regions are performed only once but the computation and the processing may also be performed more than once. That is, after the depth feature extraction processing, image feature extraction processing, relevance ratio computation processing, and feature integration processing in FIG. 3 are performed, depth feature extraction processing, image feature extraction processing, relevance ratio computation processing, and feature integration processing can be performed again. In the second depth feature extraction processing, an output of the first depth feature extraction processing is used as an input and in the second image feature extraction processing, an output of the first feature integration processing is used as an input.

List of Reference Signs

1: Environment recognition apparatus
2: Image acquisition unit
3A: First depth computation unit
3B: Second depth computation unit
4a: First feature computation unit
4b: Second feature computation unit
5: Relevance ratio computation unit
6: Depth computation unit
7: Vehicle control unit

**Claims**

1. An environment recognition apparatus comprising:

   an image acquisition unit that acquires an image picked up by a camera;
   a first depth computation unit that computes a first depth in a first region which is a region partly overlapped with or adjoining to the filed of view of the camera; and
   a second depth computation unit that, using the first depth in the first region and an image picked up by the camera, computes a second depth in a second region which is a region not embraced in the first region of the field of view of the camera.

2. The environment recognition apparatus according to Claim 1,

   wherein the image acquisition unit acquires a plurality of images picked up by a plurality of cameras,
   the first depth computation unit takes a region where the fields of view of a plurality of cameras overlap with each other as a first region and calculates a first depth from a plurality of the images, and
   the second depth computation unit computes a second depth in a second region whose image was picked up by only a single camera of a plurality of the cameras.

3. The environment recognition apparatus according to Claim 1,
   wherein the second depth computation unit computes a relevance ratio between the first region and the second region and uses information of the first depth based on the relevance ratio.

4. The environment recognition apparatus according to Claim 3,
   wherein the relevance ratio is calculated by inner product calculation of a first feature calculated by convolution computation with respect to the first depth and a second feature calculated by convolution computation with respect to an image embraced in the second region, and the first feature is weighted with the relevance ratio and added to the second feature.

5. The environment recognition apparatus according to Claim 3,
   wherein the relevance ratio is computed between identical lines in images in the first region and the second region.

6. The environment recognition apparatus according to Claim 3,
   wherein the second depth computation unit uses a past first depth computed by the first depth computation unit and the relevance ratio is computed using the present first depth and the past first depth.

7. The environment recognition apparatus according to Claim 1,

   wherein the image acquisition unit acquires one image picked up by a one camera,
   the first depth computation unit uses information from LiDAR to calculate a first depth with respect to a first region in the one image, and
   the second depth computation unit computes a second depth in the second region other than the first region whose image was picked up by the one camera.

8. An environment recognition method comprising:

acquiring two-dimensional information and three-dimensional information about an environment;

obtaining a first depth of a first region in the environment from the three-dimensional information and a feature of the first depth;

obtaining a feature of the two-dimensional information with respect to a second region other than the first region in the environment;

obtaining a relevance ratio between a feature of the two-dimensional information and a feature of the first depth; and

using a feature of the two-dimensional information corrected according to the relevance ratio to compute a second depth in the second region.

9. An environment recognition apparatus comprising:

an input unit that acquires two-dimensional information and three-dimensional information about an environment;

a first depth computation unit that obtains a first depth of a first region in the environment from the three-dimensional information; and

a second depth computation unit that obtains a feature of the first depth, obtains a feature of the two-dimensional information with respect to a second region other than the first region in the environment, obtains a relevance ratio between a feature of the two-dimensional information and a feature of the first depth, and uses a feature of the two-dimensional information corrected according to the relevance ratio to calculate a second depth in the second region.

# FIG. 1

# FIG. 2

# FIG. 3

START

↓

S100

IMAGE ACQUISITION
PROCESSING

↓

S101

FIELD OF VIEW OVERLAPPED
REGION DEPTH COMPUTATION
PROCESSING

↓

S102

DEPTH FEATURE EXTRACTION
PROCESSING (FIG. 4)

↓

S103

IMAGE FEATURE EXTRACTION
PROCESSING (FIG. 5)

↓

S104

RELEVANCE RATIO
COMPUTATION PROCESSING
(FIG. 6)

↓

S105

FEATURE INTEGRATION
PROCESSING (FIG. 6)

↓

S106

FIELD OF VIEW NON-OVERLAPPED
REGION DEPTH COMPUTATION
PROCESSING (FIG. 7)

↓

END

# FIG. 4

D3a

3A

NNWA

Pa

# FIG. 5

NON-OVERLAPPED
REGION IMAGE

2

NNWB

Pb

# FIG. 6

IDENTICAL LINE

Pa

TARGET PIXEL
Pix

Pb

f1

fn

v1

kn

k1

vn

k1'

kn'

a1

an

sn

s1

r1

r1=s1+····+sn

q2

f2

f2=q2+r1

FIG. 7

f2

D3b

NNWC

f2 IN FIG. 6 COMPUTED WITH
RESPECT TO ALL PIXELS OF
NON-OVERLAPPED REGION

# FIG. 8

IDENTICAL LINE   Pa

TARGET PIXEL   Pix   Pb

f8   f1

k1   k1

q2

v1

k8'   k1'

a8   a1

s1

s8

r1

r1=s1+・・・+s8

f2

f2=q2+r1

# FIG. 9

EP 4 648 009 A1

# FIG. 10

# FIG. 11

## INTERNATIONAL SEARCH REPORT

International application No.

**PCT/JP2023/038652**

### A. CLASSIFICATION OF SUBJECT MATTER

***G06T 7/593***(2017.01)i; ***G06T 7/00***(2017.01)i; ***G08G 1/16***(2006.01)i
FI: G06T7/593; G06T7/00 650Z; G08G1/16 C

According to International Patent Classification (IPC) or to both national classification and IPC

### B. FIELDS SEARCHED

Minimum documentation searched (classification system followed by classification symbols)

G06T7/593; G06T7/00; G08G1/16

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2022-064388 A (HITACHI ASTEMO, LTD.) 26 April 2022 (2022-04-26) | 1, 2, 8, 9 |
|  | paragraphs [0037]-[0040], fig. 8 |  |
| A | paragraphs [0037]-[0040], fig. 8 | 3-7 |
| A | WO 2014/054753 A1 (ALPS ELECTRIC CO., LTD.) 10 April 2014 (2014-04-10) | 1-9 |
|  | entire text, all drawings |  |
| A | WO 2022/054422 A1 (HITACHI, LTD.) 17 March 2022 (2022-03-17) | 1-9 |
|  | entire text, all drawings |  |
| A | WO 2022/044187 A1 (NEC CORPORATION) 03 March 2022 (2022-03-03) | 1-9 |
|  | entire text, all drawings |  |
| A | JP 6656549 B1 (MUJIN, INC.) 04 March 2020 (2020-03-04) | 1-9 |
|  | entire text, all drawings |  |
| A | JP 2011-112507 A (FUJITSU LIMITED) 09 June 2011 (2011-06-09) | 1-9 |
|  | entire text, all drawings |  |

☑ Further documents are listed in the continuation of Box C.　☑ See patent family annex.

```
*     Special categories of cited documents:
"A"   document defining the general state of the art which is not considered
      to be of particular relevance
"E"   earlier application or patent but published on or after the international
      filing date
"L"   document which may throw doubts on priority claim(s) or which is
      cited to establish the publication date of another citation or other
      special reason (as specified)
"O"   document referring to an oral disclosure, use, exhibition or other
      means
"P"   document published prior to the international filing date but later than
      the priority date claimed
```

```
"T"   later document published after the international filing date or priority
      date and not in conflict with the application but cited to understand the
      principle or theory underlying the invention
"X"   document of particular relevance; the claimed invention cannot be
      considered novel or cannot be considered to involve an inventive step
      when the document is taken alone
"Y"   document of particular relevance; the claimed invention cannot be
      considered to involve an inventive step when the document is
      combined with one or more other such documents, such combination
      being obvious to a person skilled in the art
"&"   document member of the same patent family
```

| Date of the actual completion of the international search | Date of mailing of the international search report |
|---|---|
| **26 December 2023** | **09 January 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** |  |
|  | Telephone No. |

Form PCT/ISA/210 (second sheet) (January 2015)

**INTERNATIONAL SEARCH REPORT**

| International application No. |
| --- |
| **PCT/JP2023/038652** |

## C. DOCUMENTS CONSIDERED TO BE RELEVANT

| Category* | Citation of document, with indication, where appropriate, of the relevant passages | Relevant to claim No. |
| --- | --- | --- |
| A | JP 2010-079582 A (KABUSHIKI KAISHA TOSHIBA) 08 April 2010 (2010-04-08) entire text, all drawings | 1-9 |

Form PCT/ISA/210 (second sheet) (January 2015)

<div align="center">

**INTERNATIONAL SEARCH REPORT**
**Information on patent family members**

</div>

International application No.

**PCT/JP2023/038652**

| Patent document cited in search report | | | Publication date (day/month/year) | Patent family member(s) | | | Publication date (day/month/year) |
|---|---|---|---|---|---|---|---|
| JP | 2022-064388 | A | 26 April 2022 | CN | 116348937 | A | |
| | | | | paragraphs [0060]-[0064], fig. 8 | | | |
| WO | 2014/054753 | A1 | 10 April 2014 | (Family: none) | | | |
| WO | 2022/054422 | A1 | 17 March 2022 | EP | 4213128 | A1 | |
| | | | | entire text, all drawings | | | |
| WO | 2022/044187 | A1 | 03 March 2022 | (Family: none) | | | |
| JP | 6656549 | B1 | 04 March 2020 | US | 10510155 | B1 | |
| | | | | entire text, all drawings | | | |
| JP | 2011-112507 | A | 09 June 2011 | (Family: none) | | | |
| JP | 2010-079582 | A | 08 April 2010 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022064388 A